(19) Europäisches Patentamt
European Patent Office
Office européen des brevets

(11) **EP 2 072 849 A1**

(12) **DEMANDE DE BREVET EUROPEEN**

(43) Date de publication:
**24.06.2009 Bulletin 2009/26**

(51) Int Cl.:
*F16D 55/00* (2006.01)    *F16D 69/00* (2006.01)

(21) Numéro de dépôt: **08171231.7**

(22) Date de dépôt: **10.12.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **21.12.2007 FR 0709135**

(71) Demandeur: **Robert Bosch GmbH**
**70442 Stuttgart (DE)**

(72) Inventeur: **Boisseau, Jean-Pierre**
**75014, PARIS (FR)**

(74) Mandataire: **Hurwic, Aleksander Wiktor**
**Robert Bosch France (SAS)**
**126, rue de Stalingrad**
**93700 Drancy (FR)**

(54) **Frein a disque comportant des patins à coefficients de friction différentiés.**

(57)    Frein à disque (10) de véhicule automobile, comprenant une chape fixe (14) dans laquelle sont montés coulissants axialement deux patins de frein interne (16) et externe (18), comportant chacun une garniture réalisée en un matériau de friction, qui sont susceptibles d'être appliqués par un étrier (28) de part et d'autre des faces opposées interne (30) et externe (32) d'un disque (12) qui est monté tournant autour d'un axe (B), l'étrier (28) étant monté coulissant axialement par rapport à la chape (14) au moyen d'un premier (40A) et d'un second (40B) axes de guidage parallèles axiaux, **caractérisé en ce que** au moins le matériau de friction du patin externe (18) présente un coefficient de friction réduit par rapport au coefficient de friction standard.

Fig. 3

Printed by Jouve, 75001 PARIS (FR)

EP 2 072 849 A1

**Description**

L'invention se rapporte à un frein à disque de véhicule automobile.

L'invention se rapporte plus particulièrement à un frein à disque de véhicule automobile comprenant une chape fixe dans laquelle sont montés coulissants axialement deux patins de frein interne et externe, comportant chacun une garniture réalisée en un matériau de friction, qui sont susceptibles d'être appliqués par un étrier de part et d'autre des faces opposées interne et externe d'un disque qui est monté tournant autour d'un axe, l'étrier étant monté coulissant axialement par rapport à la chape au moyen d'un premier et d'un second axes de guidage parallèles axiaux, un pied interne de chaque axe de guidage étant fixé à l'étrier et l'extrémité libre externe de chaque axe de guidage étant montée coulissante dans une première et une seconde glissière axiale associée de la chape fixe, la première et la seconde glissières étant agencées respectivement en amont et aval par rapport au sens de rotation du disque.

On connaît de nombreux exemples de freins à disque de ce type.

Dans un tel frein à disque, les patins interne et externe, lorsqu'ils sont appliqués contre les faces opposées du disque, exercent chacun un effort transversal associé induisant d'une part un premier couple associé dit interne et un premier couple associé dit externe, s'exerçant tous deux à la jonction de chaque pied interne d'axe de guidage et de l'étrier, et d'autre part un second couple associé dit interne et un second couple associé dit externe s'exerçant tous deux à au moins un point de contact entre la chape et l'étrier.

Ces couples tendent d'une part à fragiliser la liaison du pied interne de guidage sur l'étrier et d'autre part à déformer la chape.

La déformation de la chape a pour effet de fausser le parallélisme des glissières qui entrent alors en contact avec les axes de guidage, risquant ainsi de perturber le coulissement de l'étrier par rapport à la chape.

Or, de manière général, tout obstacle au coulissement entre l'étrier et les axes de guidage doit normalement être évité pour permettre le recul de l'étrier et, par suite, le recul des plaquettes par rapport au disque. En cas de résistance ou de grippage du coulissement de l'étrier, le(s) patin(s) de frein risquent de frotter sur le disque de frein.

De plus, la déformation de la chape est susceptible de provoquer, après plusieurs cycles de freinage, une fragilisation par fatigue de ladite chape fixe.

Par ailleurs, dans un frein à disque conventionnel, les patins interne et externe présentent des caractéristiques identiques, c'est-à-dire qu'ils sont de même épaisseur et que les coefficients de friction de leurs matériaux de friction sont identiques et sont généralement égaux à la valeur d'un coefficient de friction dit standard.

L'invention propose de réduire la résultante des couples s'exerçant d'une part à la jonction de chaque pied interne d'axe de guidage et de l'étrier et d'autre part au point de contact entre la chape et l'étrier en modifiant les caractéristiques des patins de frein interne et externe.

Dans ce but, l'invention propose un frein à disque du type décrit précédemment, caractérisé en ce qu'au moins le matériau de friction du patin externe présente un coefficient de friction réduit par rapport au coefficient de friction standard pour réduire les premier et second couples externes.

Selon d'autres caractéristiques de l'invention :

- le patin interne présente un coefficient de friction accru par rapport au coefficient de friction standard pour que la somme des efforts transversaux exercés par les patins interne et externe soit égale à la somme des efforts transversaux exercés par des patins interne et externe dits standards.
- l'épaisseur du patin interne est supérieure à l'épaisseur du patin externe pour que les durées de vie des matériaux de friction de chacun desdits patins interne et externe, chacune inversement proportionnelle à la valeur de son coefficient de friction associé, soient sensiblement égales,
- le disque comporte des moyens de refroidissement de sa face interne destinés à éviter sa déformation.

D'autres caractéristiques et avantages de l'invention apparaîtront à la lecture de la description détaillée qui suit pour la compréhension de laquelle on se reportera aux dessins annexés dans lesquels :

- la figure 1 est une vue schématique en perspective d'un frein à disque réalisé conformément à un état antérieur de la technique ;
- la figure 2 est une vue schématique en coupe du frein à disque de la figure 1 ;
- la figure 3 est une vue schématique en coupe d'un frein à disque selon l'invention.

Dans la description qui va suivre, des chiffres de référence identiques désignent des pièces identiques ou ayant des fonctions similaires.

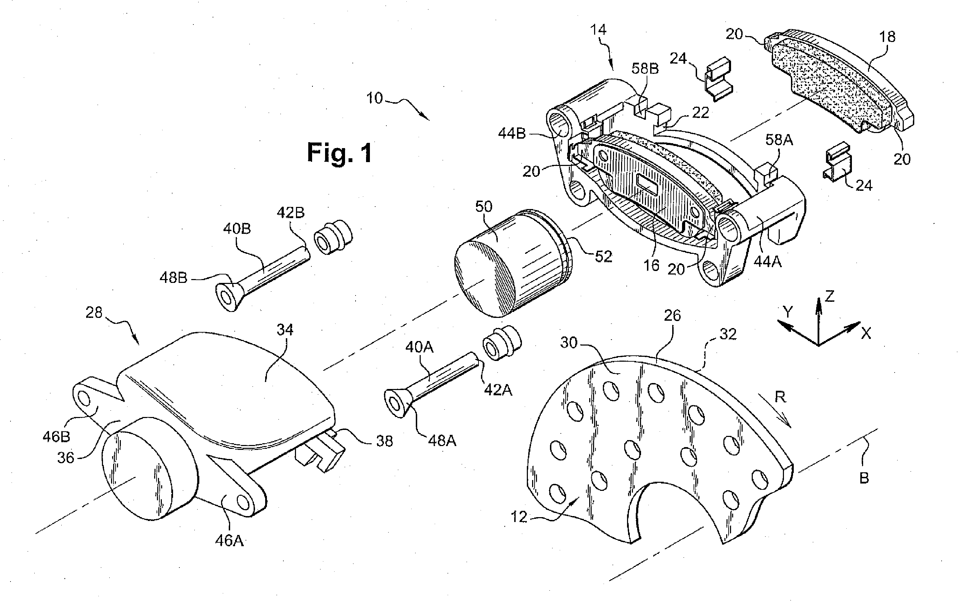

Dans la suite de la description, on adoptera à titre non limitatif une orientation axiale indiquée par la flèche "X" de la figure 1 qui est dirigée depuis l'intérieur vers l'extérieur selon la position du frein par rapport au véhicule automobile, une orientation transversale indiquée par la flèche "Y" qui est dirigée de l'amont vers l'aval, et une orientation radiale indiquée par la flèche "Z" qui est dirigée de bas en haut.

Par la suite, des éléments identiques, similaires ou analogues seront indiqués par des mêmes numéros de référence.

On a représenté à la figure 1 un frein à disque 10 de véhicule automobile.

De manière connue, le véhicule comporte un disque 12 qui est monté tournant autour de son axe "X" d'orientation axiale. Le disque 12 est lié en rotation à une roue qui lui est coaxiale. Le disque 12 tourne selon le sens amont/aval "R" opposé à la flèche "Y" .

Le frein à disque 10 comporte une chape fixe 14 dans laquelle deux patins de frein interne 16 et externe 18 sont montés coulissant axialement.

De manière connue, chacune des extrémités transversales opposées 20 du patin 16, 18 est montée coulissante avec jeu dans une coulisse 22 associée de la chape 14 par l'intermédiaire d'un ressort à lame 24 interposé entre ladite extrémité transversale 20 et ladite coulisse associée 22.

Ce ressort 24 permet d'autoriser un degré déterminé de mouvement du patin 16, 18 dans la chape 14, c'est-à-dire, généralement mais de manière non limitative, un mouvement de coulissement transversal d'amont vers l'aval par rapport au mouvement de rotation du disque 12.

La chape fixe 14 est destinée à chevaucher un bord périphérique 26 du disque 12.

Un étrier de frein 28 comporte un piston hydraulique 50 dont une face interne 52 est susceptible de serrer chaque patin de frein interne 16 et externe 18 de part et d'autre des faces opposées interne 30 et externe 32 du disque 12.

De manière connue, l'étrier 28 comporte une voûte 34 qui s'étend axialement au-dessus de la chape 14 en la recouvrant.

Deux ailes interne 36 et externe 38 s'étendent radialement depuis les bords d'extrémité interne et externe de la voûte 34 vers l'axe "B". La face interne de l'aile externe 38 est ainsi agencée en regard du patin externe 18, et la face externe de l'aile interne 36, en regard du patin interne 16.

L'étrier 28 est monté coulissant axialement par rapport à la chape fixe 14. A cet effet, l'étrier 28 comporte des premier et second axes de guidage 40A, 40B, ou "colonnettes" respectivement amont et aval, dont des pieds internes associés 48A, 48B sont fixés à des oreilles associées 46A, 46B de l'aile interne 36 de l'étrier 28 et dont des extrémités libres externes associées 42A, 42B sont montées coulissantes dans des première et seconde glissière axiale associées 44A, 44B associée de la chape fixe 14,

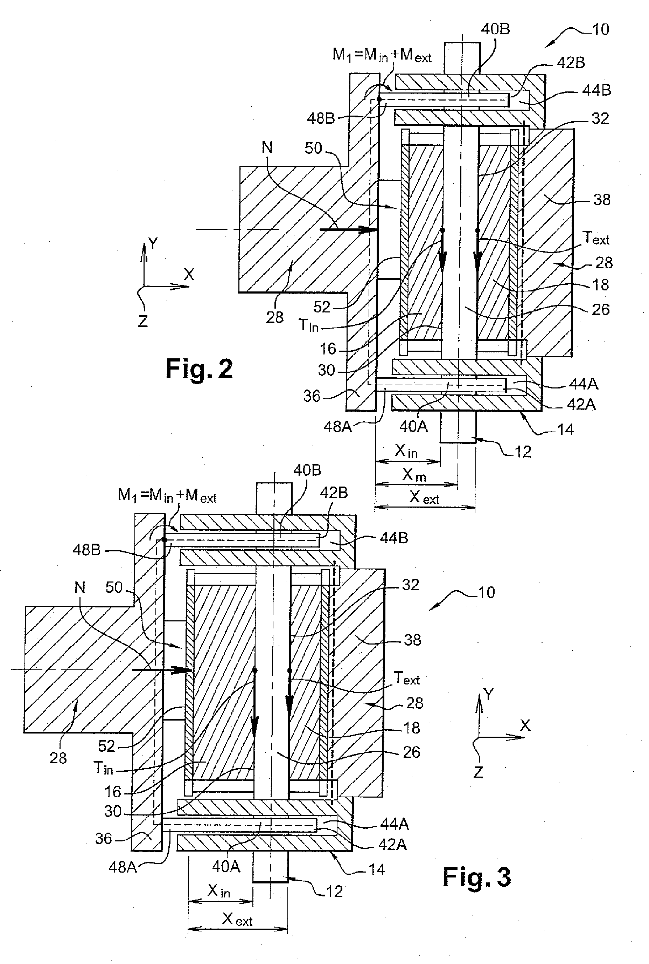

De manière connue, comme l'illustre schématiquement la figure 2, lorsqu'un effort de freinage "N", orienté selon la direction "X" est appliqué par la face interne du piston 50 sur les patins 16, 18, le patin interne 16 exerce un effort "$T_{in}$" d'orientation transversale sur la face interne 30 du disque 12 et le patin externe 18 exerce un effort "$T_{ext}$" sur la face externe 32 du disque 12.

A la jonction de chaque pied interne 48B, 48A avec l'étrier 28, l'effort transversal "$T_{in}$" induit un premier couple "$M_{in}$" associé dit interne résultant du produit de l'effort "$T_{in}$" et de la distance axiale "$X_{in}$" séparant chaque pied interne 48B, 48A de la face de friction 30 du disque 30.

D'une manière analogue, à la jonction de chaque pied interne 48B, 48A avec l'étrier 28, l'effort transversal "$T_{ext}$" induit un premier couple "$M_{ext}$" associé dit externe résultant du produit de l'effort "$T_{ext}$" et de la distance axiale "$X_{ext}$" séparant chaque pied interne 48B, 48A de la face de friction 32 opposée du disque.

La somme des premiers couples interne "$M_{in}$" et externe "$M_{ext}$" soumet donc la jonction de chaque pied interne 48B, 48A avec l'étrier à un premier couple "M1" total :

$$M1 = M_{in} + M_{ext} = T_{in} \times x_{in} + T_{ext} \times x_{ext}$$

Les patins 16, 18 étant conventionnellement identiques et de même coefficient de friction, les efforts "$T_{in}$" et "$T_{ext}$" sont égaux à un effort "T". De ce fait, la somme des premiers couples interne "$M_{in}$" et externe "$M_{ext}$" soumet donc la jonction de chaque pied interne 48B, 48A avec l'étrier à un premier couple "M1" total exprimé en fonction de la distance moyenne "$x_m$" entre les distances "$X_{in}$" et "$X_{ext}$" :

$$M1 = M_{in} + M_{ext} = T \times (x_{in} + x_{ext}) = 2 \times T \times x_m$$

D'une manière analogue, lors d'un freinage, un second couple associé dit interne et un second couple associé dit externe (non représentés) s'exercent tous deux à au moins un point de contact entre la chape 14 et l'étrier 28.

Pour réduire ces couples, une solution consiste donc à réduire l'intensité d'au moins un des efforts "$T_{in}$" ou "$T_{ext}$".

Dans ce but, l'invention propose un frein à disque du type décrit précédemment, caractérisé en ce qu'au moins le matériau de friction du patin externe 18 présente un coefficient de friction réduit par rapport au coefficient de friction standard pour réduire le premier couple externe "$M_{ext}$" et le second couple externe (non représenté).

Dans cette configuration, le patin externe 18 exerce un effort "$T_{ext}$" réduit d'intensité inférieure à l'effort "$T_{in}$" exercé par le patin 16.

La somme des premiers couples interne "$M_{in}$" et externe "$M_{ext}$" soumet donc la jonction de chaque pied interne 48B, 48A avec l'étrier à un premier couple réduit "M1" total :

$$M1 = M_{in} + M_{ext} = T_{in} \times x_{in} + T_{ext} \times x_{ext}$$

avec $T_{ext} < T_{in}$.

Le couple "M1" se trouve donc réduit par rapport au cas précédemment cité dans lequel les deux patins 16, 18 présentent des coefficients de friction identiques.

Il en est de même en ce qui concerne les second couples interne et externes (non représentés) qui s'exercent tous deux à au moins un point de contact entre la chape 14 et l'étrier 28.

Dans le mode de réalisation préféré de l'invention le patin 16 interne présente un coefficient de friction accru par rapport au coefficient de friction standard pour que la somme des efforts transversaux "$T_{in}$" et "$T_{ext}$" exercés par les patins interne 16 et externe 18 soit égale à la somme des efforts transversaux "T" exercés par des patins interne et externe 16, 18 dits standards :

$$T_{in} + T_{ext} = 2 \times T$$

Cette configuration permet de proposer un frein à disque 10 exerçant sur le disque 16, 18 un effort de freinage identique à un frein à disque conventionnel.

Il sera compris que dans cette configuration, les faces de friction opposées 30 et 32 du disque 12 seront soumises à des efforts différents. On pourra donc prévoir des moyens de refroidissement particuliers de la face interne 30 du disque 12 pour éviter sa déformation.

Enfin, l'épaisseur du patin interne 16 sera avantageusement prévue supérieure à l'épaisseur du patin externe 18 pour que les durées de vie des matériaux de friction de chacun desdits patins internes 16 et externes 18 soient sensiblement égales.

En effet, la durée de vie d'un matériau de friction étant sensiblement inversement proportionnelle à la valeur de son coefficient de friction associé, le patin interne 16, qui bénéficie d'un coefficient de friction plus élevé, sera soumis à une usure plus rapide que la patin externe 18. Il importe donc de compenser cette usure prématurée par une épaisseur supérieure du matériau de friction du patin interne 16.

L'invention permet donc de limiter de manière significative les déformations auxquelles est soumis la chape 14 d'un frein à disque 10.

Il est bien entendu que la mise en oeuvre d'un disque avantageusement ventilé à épaisseur de faces asymétriques, c'est à dire d'épaisseur différentes entre le flanc interne et le flanc externe, en combinaison soit avec des plaquettes externes et internes de même épaisseur soit avec des plaquettes externes et internes d'épaisseur différentes, ne sort pas du cadre de la présente invention.

**Revendications**

1. Frein à disque (10) de véhicule automobile, comprenant une chape fixe (14) dans laquelle sont montés coulissants axialement deux patins de frein interne (16) et externe (18), comportant chacun une garniture réalisée en un matériau de friction, qui sont susceptibles d'être appliqués par un étrier (28) de part et d'autre des faces opposées interne (30) et externe (32) d'un disque (12) qui est monté tournant autour d'un axe (B), l'étrier (28) étant monté coulissant axialement par rapport à la chape (14) au moyen d'un premier (40A) et d'un second (40B) axes de guidage parallèles axiaux, un pied interne (48A, 48B) de chaque axe de guidage (40A, 40B) étant fixé à l'étrier (28) et l'extrémité libre externe (42A, 42B) de chaque axe de guidage (40A, 40B) étant montée coulissante dans une première et une seconde glissière axiale (44A, 44B) associée de la chape fixe (14), la première (44A) et la seconde (44B) glissières étant agencées respectivement en amont et aval par rapport au sens (T) de rotation du disque (12), les patins interne et externe (16, 18) étant chacun susceptibles d'exercer, lorsqu'ils sont appliqués contre les faces opposées (30, 32) du disque (12), un effort transversal ($T_{in}$, $T_{ext}$) associé induisant un premier couple associé ($M_{in}$) dit interne et un premier couple associé ($M_{ext}$) dit externe, s'exerçant à la jonction de chaque pied (48A, 48B) interne d'axe (40A, 40B) de guidage et de l'étrier (28) et un second couple associé dit interne et un second couple associé dit externe s'exerçant à au moins un point de contact interne entre la chape (14) et l'étrier (28), les coefficients de friction des matériaux de friction des patins interne (16) et externe (18) étant déterminés par rapport à une valeur d'un coefficient de friction dit standard associé à des matériaux de friction identiques de deux patins (16, 18) internes et externes de même épaisseur dits standards ,

**caractérisé en ce que** au moins le matériau de friction du patin externe (18) présente un coefficient de friction réduit par rapport au coefficient de friction standard pour réduire le premier ($M_{ext}$) couple externe et le second couple externe et **en ce que l'épaisseur du patin interne (16) est supérieure à l'épaisseur du patin externe (18) pour que les durées de vie des matériaux de friction de chacun desdits patins interne (16) et externe (18), chacune inversement proportionnelle à la valeur de son coefficient de friction associé, soient sensiblement égales.**

2. Frein à disque (10) selon la revendication précédente, **caractérisé en ce que** le patin interne (16) présente un coefficient de friction accru par rapport au coefficient de friction standard pour que la somme des efforts transversaux ($T_{in}$, $T_{ext}$) exercés par les patins interne et externe soit égale à la somme (2T) des efforts transversaux exercés par des patins interne (16) et externe (18) dits standards.

3. Frein à disque (10) selon l'une des revendications précédentes, **caractérisé en ce que** le disque (12) comporte des moyens de refroidissement de sa face interne (30) destinés à éviter sa déformation.

Fig. 1

Fig. 2

Fig. 3

Europäisches
Patentamt

European
Patent Office

Office européen
des brevets

# RAPPORT DE RECHERCHE EUROPEENNE

Numéro de la demande

EP 08 17 1231

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JP 11 082580 A (NISSIN KOGYO KK) 26 mars 1999 (1999-03-26) * le document en entier * * abrégé * ----- | 1 | INV. F16D55/00 F16D69/00 |
| A | US 2005/217951 A1 (IWASAKI MASARU [JP]) 6 octobre 2005 (2005-10-06) * abrégé; figures * ----- | 1 | |
| A | DE 39 03 361 A1 (BAYERISCHE MOTOREN WERKE AG [DE]) 23 août 1990 (1990-08-23) * abrégé; figures * ----- | 3 | |

**DOMAINES TECHNIQUES RECHERCHES (IPC)**

F16D

Le présent rapport a été établi pour toutes les revendications

| Lieu de la recherche | Date d'achèvement de la recherche | Examinateur |
|---|---|---|
| Berlin | 27 février 2009 | Schäfer, Arnold |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 08 17 1231

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-02-2009

| Document brevet cité au rapport de recherche | | Date de publication | Membre(s) de la famille de brevet(s) | | Date de publication |
|---|---|---|---|---|---|
| JP 11082580 | A | 26-03-1999 | AUCUN | | |
| US 2005217951 | A1 | 06-10-2005 | AU | 2005201358 A1 | 20-10-2005 |
| | | | CA | 2502525 A1 | 30-09-2005 |
| DE 3903361 | A1 | 23-08-1990 | AUCUN | | |

EPO FORM P0460

Pour tout renseignement concernant cette annexe : voir Journal Officiel de l'Office européen des brevets, No.12/82